**Europäisches Patentamt**

**European Patent Office**

**Office européen des brevets**

(19)

(11) Veröffentlichungsnummer: **0 058 773**
**B1**

(12) # EUROPÄISCHE PATENTSCHRIFT

(45) Veröffentlichungstag der Patentschrift:
31.10.84

(21) Anmeldenummer: 81110297.9

(22) Anmeldetag: 10.12.81

(51) Int. Cl.³: **B 60 T 8/18**

(54) Druckluftbremsanlage für luftgefederte Drei- und Mehrachs-Strassenfahrzeuge.

(30) Priorität: 23.02.81 DE 3106640

(43) Veröffentlichungstag der Anmeldung:
01.09.82 Patentblatt 82/35

(45) Bekanntmachung des Hinweises auf die Patenterteilung:
31.10.84 Patentblatt 84/44

(84) Benannte Vertragsstaaten:
AT CH DE FR GB IT LI NL SE

(56) Entgegenhaltungen:
DE - C - 2 548 351
US - A - 3 165 363
US - A - 3 920 283

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Schmidt, Reinhardt, Sehnderstrasse 14,
D-3160 Lehrte (DE)**
Erfinder: **Pannbacker, Helmut, Bruckweg 30,
D-3005 Hemmingen 5 (DE)**
Erfinder: **Lindemann, Klaus, Lindener Weg 40 B,
D-3000 Hannover 91 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

## Beschreibung

Die Erfindung betrifft eine Druckluftbremsanlage für luftgefederte Drei- und Mehrachs-Straßenfahrzeuge, gemäß dem Oberbegriff des Anspruchs 1.

Straßenfahrzeuge, welche für den Transport von sehr hohen Nutzlasten ausgelegt sind, werden in der Regel mit Doppelachsen ausgerüstet, wobei je nach den Einsatzbedingungen des Fahrzeuges eine der beiden Achsen als zweite Lenkachse ausgelegt sein kann.

Um den Bremsdruck in den Bremszylindern dem jeweiligen Beladungszustand eines Fahrzeges anzupassen, sind Bremskraftregler vorgesehen, welche bei luftgefederten Fahrzeugen von den Luftfederbalgdrücken gesteuert werden.

Es ist insbesondere üblich, den Bremsdruck an der Hinterachse zu regeln, da diese besonders starken Schwankungen bezüglich der Achslasten unterworfen ist. Da auch die Achslast der Vorderachse mehr oder weniger beeinflußt wird, erweist es sich als zweckmäßig, auch die auf die Vorderachsbremsen wirkenden Bremskräfte in einem bestimmten Verhältnis zu den auf die Hinterradbremsen wirkenden Bremskräften zu regeln.

Zur Mitregelung der Vorderachse gibt es verschiedene Möglichkeiten, wobei die Anordnung eines separaten Bremskraftreglers für die Vorderachse die optimalste und aufwendigste Lösung darstellt.

Eine Anwendung dieser Lösung auf ein Nutzfahrzeug mit einer zweiten Lenkachse würde bedeuten, daß bei einer Bremsung des Fahrzeuges, in die Radbremszylinder der zweiten und dritten Achse bzw. der zweiten Lenkachse und der Hinterachse derselbe Bremsdruck eingesteuert würde. Dies hätte zur Folge, daß zwar die Bremsen der Hinterachse voll greifen, daß jedoch die Bremsen der zweiten Lenkachse blockieren. Dies wiederum führt zu einem übermäßigen Verschleiß der Reifen und gegebenenfalls zu einem instabilen Bremsverhalten des Fahrzeuges.

Der Erfindung liegt deshalb die Aufgabe zugrunde, bei einer Druckluftbremsanlage der eingangs genannten Art eine lastabhängige Regelung der Bremskraft der zweiten Lenkachse einer Doppelachse mit einfachen Mitteln zu schaffen, welche ein Blockieren der Räder der zweiten Lenkachse bei jedem Beladungszustand des Fahrzeuges ausschließt.

Diese Aufgabe wird durch die im Patentanspruch 1 aufgeführte Erfindung gelöst.

Ein vorteilhaftes Ausführungsbeispiel für das bei der Erfindung verwendete Druckregelventil ist durch die DE-PS 25 48 351 bekanntgeworden. Die Anordnung dieses Ventils als relaisgesteuertes Druckregelventil zwischen dem Brems-/Luftfederkreis der hinteren dritten Achse und der zweiten Lenkachse ist in einfacher Weise eine optimale und kostengünstige Lösung geschaffen.

Vorteilhafte Weiterbildungen und Ausgestaltungen der Erfindung sind den Unteransprüchen zu entnehmen.

Die in den Unteransprüchen vorgeschlagenen Möglichkeiten zur Lösung der Aufgabe sind mit dem als Relaisventil ausgelegten Druckbegrenzungsventil gekoppelt und können je nach Auslegung der Gesamtbremsanlage des Fahrzeuges und dessen Einsatzbedingungen zur Anwendung gelangen.

Bei Fahrzeugbremsanlagen mit automatischem Blockierverhinderer (ABV) ist es technischer Standard, elektronische Steuereinrichtungen mit vier getrennten Regelkanälen zu verwenden. Mit solchen in großen Stückzahlen hergestellten Steuereinrichtungen ist also eine Einzelrad-Regelung eines Fahrzeuges mit zwei Achsen bzw. vier Rädern möglich.

Sonderausführungen der elektronischen Steuereinrichtungen mit mehr als vier Kanälen, wie sie bei Nutzfahrzeugen, die drei Achsen aufweisen zur Einzelrad-Regelung denkbar wären, sind im allgemeinen zu aufwendig.

Dies würde bei dem vorhergenannten Fahrzeug mit einer Doppelachse bedeuten, daß die nicht blockiergeschützten Räder der zweiten Lenkachse bei einer Fahrzeugbremsung wie eingangs beschrieben ebenfalls blockieren würden.

Auch bei blockiergeschützten Fahrzeugbremsanlagen der eingangs genannten Art bietet sich dieselbe Lösung an, wie bei den beschriebenen nicht blockiergeschützten Anlagen.

Die Erfindung wird nachfolgend anhand von Ausführungsbeispielen, die in der Zeichnung dargestellt sind, näher erläutert. Es zeigt

Fig. 1 das Schema einer pneumatischen Brems-/Luftfederanlage der zweiten und der dritten Achse eines Dreiachs-Fahrzeuges mit der Funktionsverbindung Druckregelventil-Doppelabsperrventil,

Fig. 2 das Schema einer Anlage gemäß Fig. 1, jedoch mit einer Funktionsverbindung Druckregelventil-Relaisventil,

Fig. 3 das Schema einer Anlage gemäß Fig. 1, jedoch mit einer Funktionsverbindung Druckregelventil-Bremskraftregler und

Fig. 4 ein Diagramm gemäß der Charakteristik des Druckregelventils.

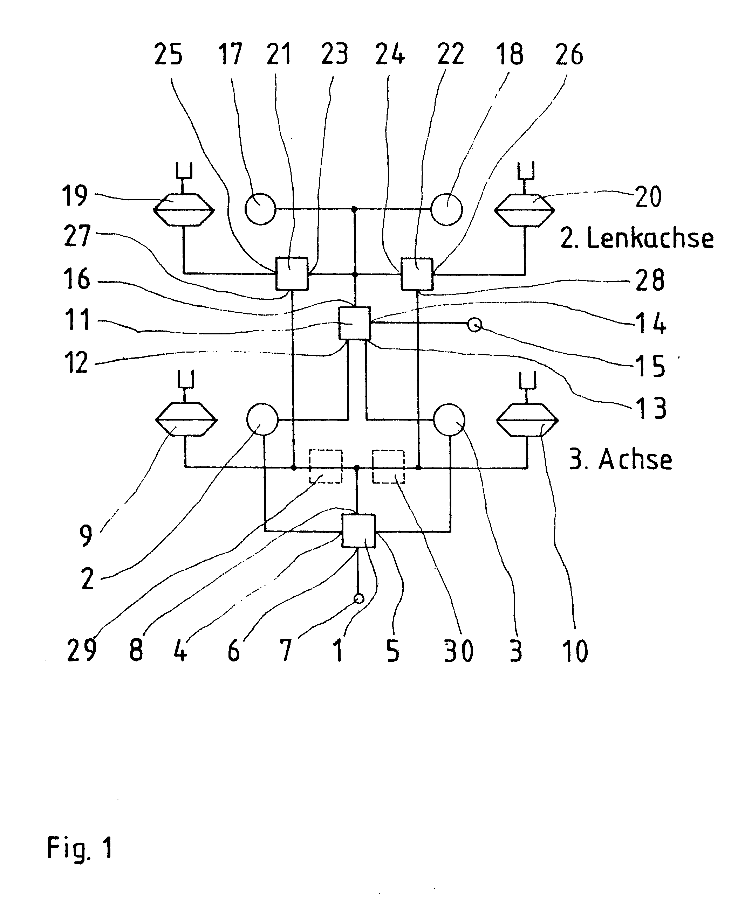

Die Schemata der Fig. 1, 2 und 3 stellen Bremsanlagen eines mit einer Doppelachse ausgerüsteten, luftgefederten Dreiachs-Fahrzeuges dar, wobei zur Erläuterung der Erfindung nur die zweite Lenkachse und die dritte Achse zeichnerisch erfaßt sind. Die die Bremsdrücke steuernden Luftfederbälge sind als Symbole ebenfalls dargestellt.

Gemäß Fig. 1 ist ein automatisch-lastabhängiger Bremskraftregler 1 der dritten Achse mit der dritten Achse zugeordneten, über ein beladungsabhängig gesteuertes Luftfederventil an eine Druckluftquelle angeschlossen, Luftfederbälgen 2, 3 über Steueranschlüsse 4, 5 verbunden. Die über einen Einlaßanschluß 6 in den Bremskraftregler 1 strömende Druckluft einer Druckluftquelle 7 strömt lastabhängig geregelt über einen Auslaßanschluß 8 in die Bremszylinder 9, 10 der dritten Achse. Die Luftfederbälge 2, 3 der dritten Achse sind außerdem mit einem als Relaisventil ausgelegten Druckregelventil 11 über dessen Steueranschlüsse 12, 13 verbunden. Die über einen Einlaßanschluß 14 in das Druckregelventil 11 strömende Druckluft einer Druckluftquelle 15 strömt in einer gemäß der Charakteristik des Druckregelventils 11 geregelten Druckhöhe über dessen Auslaßanschluß 16 in die Luftfederbälge 17, 18 der zweiten Achse. Von der vom Druckregelventil 11 zu den Luftfederbälgen 17, 18 führenden Verbindungsleitung führen Leitungen zu den Bremszylindern 19, 20 der zweiten Achse. In diese Leitungen sind Doppelabsperrventile 21, 22, welche zwei Einlaßanschlüsse 23, 24 und 27, 28 und einen Auslaßanschluß 25, 26 besitzen, geschaltet, wobei die ersten Einlaßanschlüsse 23, 24 vom Druck der Luftfederbälge 17, 18 der zweiten Achse und die zweiten Einlaßanschlüsse 27, 28 von den in die Bremszylinder 9, 10 der dritten Achse eingesteuerten lastabhängig geregelten Druck beaufschlagbar sind und die Auslaßanschlüsse 25, 26 je eine Verbindung zu den Bremszylindern 19, 20 der zweiten Achse herstellen.

Die gestrichelten Symbole 29, 30 stellen Magnetregelventile einer elektronischen Blockierschutzanlage dar, welche der dritten Achse zugeordnet sind.

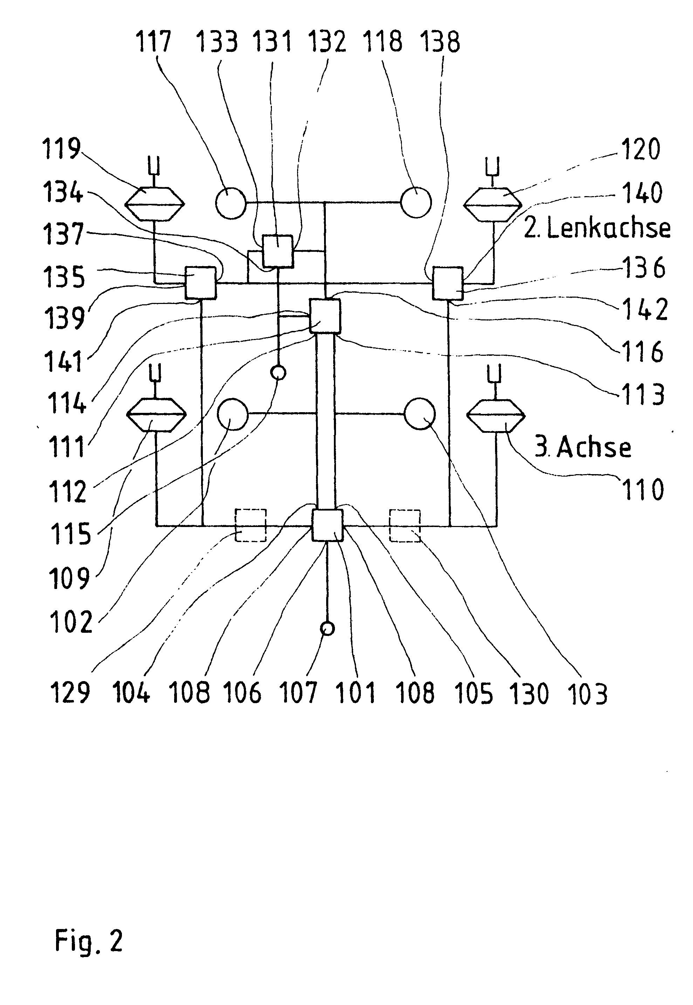

Die Bremsanlage gemäß Fig. 2 entspricht in ihrem Grundaufbau der Bremsanlage gemäß Fig. 1.

Die in der Zeichnung den Bauteilen zugeordneten Zahlen beginnend mit 101, entsprechen mit der Einer- und Zehner-Zahlenreihe aufgrund der Gleichheit der Bauteile den Zahlen der Fig. 1. Die abweichenden Bauteile sind ein erstes Relaisventil 131 und je ein den Bremszylindern 119, 120 der zweiten Achse zugeordnetes zweites Relaisventil 135, 136.

Das erste Relaisventil 131 ist mit seinem Steueranschluß 132 und seinem Auslaßanschluß 133 in eine Leitung geschaltet, welche von der Leitung zwischen dem Druckregelventil 111 und den Luftfederbälgen 117, 118 der zweiten Achse zu den Bremszylindern 119, 120 der zweiten Achse führt, wobei die Beaufschlagung mit Druckluft über den Einlaßanschluß 134 erfolgt.

Des weiteren sind in die vom Auslaßanschluß 133 des ersten Relaisventils 131 zu den Bremszylindern 119, 120 führende Leitungen je ein zweites Relaisventil 135, 136 mit deren Vorratsanschlüssen 137, 138 und Auslaßanschlüssen 139, 140 angeordnet. Die Ansteuerung der zweiten Relaisventile 135, 136 mit Druckluft erfolgt über einen Steueranschluß 141, 142 mit dem in die Bremszylinder 109, 110 der dritten Achse eingesteuerten lastabhängig geregelten Bremsdruck, d. h. die Versorgung erfolgt getrennt von der Hinterachse über das Relaisventil 131.

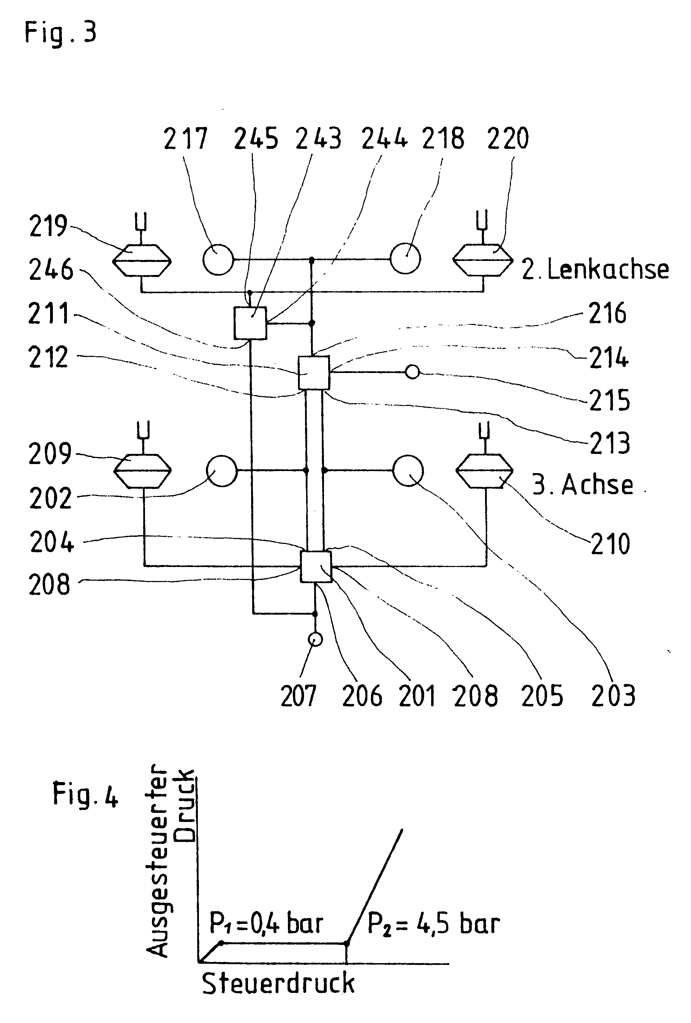

In der Fig. 3 beginnen die Zahlen der Bauteile mit 201. Abweichend von den Anlagen gemäß der Fig. 1 und 2 ist ein zweiter Bremskraftregler 243 mit seinem Steueranschluß 244 und seinem Auslaßanschluß 245 in eine Leitung geschaltet, die von der Leitung zwischen dem Druckregelventil 211 und den Luftfederbälgen 217, 218 der zweiten Achse zu den Bremszylindern 219, 220 der zweiten Achse führt, wobei die Beaufschlagung mit Druckluft über dessen Einlaßanschluß 246 erfolgt.

Die Funktion der gemäß den Fig. 1, 2 und 3 beschriebenen Bremsanlagen ist wie folgt:

Bei einer Bremsung werden die Bremszylinder 9, 10; 109, 110; 209, 210 mit dem Bremskraftregler 1, 101, 201 geregelten Bremsdruck, dessen Regelung durch Ansteuerung der von der Achsbelastung der dritten Achse abhängigen Balgdrücke der Luftfedern 2, 3; 102, 103; 202, 203 erfolgt, belüftet. Mit denselben von der Achsbelastung der dritten Achse abhängigen Luftfederbalgdrücken erfolgt gleichzeitig eine Ansteuerung des Druckregelventils 11, 111, 211. Gemäß der einstellbaren Charakteristik dieses Druckregelventils 11, 111, 211 werden die Luftfederbälge 17, 18; 117, 118; 217, 218 belüftet. Eine Einstellung der Charakteristik des Druckregelventils 11, 111, 211 kann gemäß der in Fig. 4 dargestelten Kennlinie derart verlaufen, daß bis zu einem Steuerdruck P1, z. B. von 0,4 bar, dieser Druck in die Luftfederbälge 17, 18; 117, 118; 217, 218 der zweiten Achse ausgesteuert wird, dann jedoch in dieser Druckhöhe über einem Druckbereich P1 bis P2 konstant bleibt, z. B. bis zu einem Steuerdruck P2 = 4,5 bar und beim Überschreiten des Druckes P2 ein Druck aussteuern, der überproportional abgestuft in den Luftfederbälgen 17, 18; 117, 118; 217, 218 der zweiten Achse ansgeigt.

Gemäß Fig. 1 steht der in die Luftfederbälge 17, 18 eingesteuerte Druck auch an den Anschlüssen 23, 24 der Doppelabsperrventile 21, 22 an. Die Anschlüsse 27, 28 der Doppelabsperrventile 21, 22 werden gleichzeitig mit dem lastabhängig geregelten Bremsdruck der Bremszylinder 9, 10 der dritten Achse beaufschlagt. Solange der an den Anschlüssen 27, 28 der Doppelabsperrventile 21, 22 anstehende Druck höher ist, als der Druck an deren Anschlüssen 23, 24, schaltet der höhere Druck die Doppelabsperrventile 21, 22 in eine Schaltstellung, daß der an den Anschlüssen 23, 24 anstehende niedrigere Druck in den Bremszylindern 19, 20 nicht überschritten wird. Erst wenn bei einer hohen Beladung der dritten Achse das Doppelregelventil 11 von einem derart hohen Druck der Luftfederbälge 2, 3 der dritten Achse angesteuert wird, der in den progressiven Kennlinienbereich des Druckregelventils 11 fällt, kann der Druck an den Anschlüssen 23, 24 der Doppelabsperrventile 21, 22 höher sein, als der Druck an den Anschlüssen 27, 28. Die Doppelabsperrventile 21, 22 schalten um und lassen den an den Anschlüssen 27, 28 anstehenden niedrigeren Druck, nämlich den lastabhängig geregelten Druck der dritten Achse, in die Bremszylinder 19, 20 der zweiten Achse durchströmen.

Gemäß Fig. 2 steht die vom Druckregelventil 111 ausgesteuerte in die Luftfederbälge strömende Druckluft am Steueranschluß 132 des ersten Relaisventils 131 an.

Entsprechend der anhand der Fig. 1 beschriebenen Funktion des Druckregelventils 111 kann das erste Relaisventil 131 im unteren Beladungsbereich der dritten Achse nur einen niedrigen konstanten Druck und erst im oberen Beladungsbereich einen progressiv ansteigenden Druck in die Bremszylinder 119, 120 durchsteuern. Die zwischen das erste Relaisventil 131 und die Bremszylinder 119, 120 geschalteten zweiten Relaisventile 135, 136 dienen der Verbesserung des Zeitverhaltens der Bremse und der Ansteuerung durch den Bremsdurck der Hinterachse.

Gemäß Fig. 3 wird der Steueranschluß 244 des zweiten Bremskraftreglers 242 vom Druck des vom Druckregelventil 211 ausgesteuerten, in die Luftfederbälge 217, 218 der zweiten Achse strömenden Druckluft beaufschlagt. Im Verhältnis zur Charakteristik des Druckregelventils 211 erfolgt über den zweiten Bremskraftregler 243 die Beaufschlagung der Bremszylinder 219, 220 der zweiten Achse.

Dem hinteren Teil des Fahrzeuges können auch weitere Achse zugeordnet sein, wobei es auch möglich sein kann, daß die Bremskraft einer hinteren Achse gemäß der Erfindung in Abhängigkeit von der Belastung einer anderen Hinterachse regelbar ist.

Es ist auch vorstellbar, daß die Bremskraft einer vorderen Achse in Abhängigkeit von der Belastung einer anderen Vorderachse gemäß der Erfindung geregelt wird.

**Patentansprüche**

1. Druckluftbremsanlage für luftgefederte Drei- und Mehrachs-Straßenfahrzeuge, welche folgende Merkmale umfaßt:

a)  dem vorderen Teil des Fahrzeuges sind eine gebremste und gelenkte erste Achse zugeordnet;

b)  dem hinteren Teil des Fahrzeuges ist eine gebremste und gelenkte zweite Achse und eine gebremste dritte Achse zugeordnet;

c)  die Bremskraft wenigstens der zweiten und der dritten Achse ist in Abhängigkeit vom Druck der Luftfederbälge lastabhängig regelbar;

d)  zur Regelung der Bremskraft der dritten Achse ist ein automatisch-lastabhängiger Bremskraftregler (1) vorgesehen, dessen Regeldruckansteuerung von den Luftfederbälgen (2, 3) der dritten Achse erfolgt;

e)  die Luftfederbälge (2, 3) der dritten Achse sind über ein beladungsabhängig gesteuertes Luftfederventil an eine Druckluftquelle angeschlossen,

gekennzeichnet durch folgende Merkmale:

f)  die Luftfederbälge (17, 18) der zweiten Achse sind über ein Druckregelventil (11) an die Druckluftquelle (15) angeschlossen;

g)  wenigstens ein Steueranschluß (12, 13) des Druckregelventils (11) ist mit den Luftfederbälgen (2, 3) der dritten Achse verbunden;

h)  das Druckregelventil (11) weist eine derartige Charakteristik auf, daß bei einem in einem unteren Beladungsbereich von den Luftfederbälgen (2, 3) der dritten Achse eingesteuerten Druck, der in die Luftfederbälge (17, 18) der zweiten Achse ausgesteuerte Druck konstant oder nahezu konstant bleibt;

i)  zur Regelung der Bremskraft der zweiten Achse ist mindestens eine vom Druck der Luftfederbälge (17, 18) der zweiten Achse ansteuerbare zusätzliche Ventileinrichtung vorgesehen.

2. Druckluftbremsanlage nach Anspruch 1, gekennzeichnet durch folgende Merkmale:

a)  die zusätzliche Ventileinrichtung ist als Doppelabsperrventil (21, 22) ausgebildet;

b)  das Doppelabsperrventil (21, 22) verfügt über zwei Einlaßanschlüsse (23, 27; 24, 28) und über mindestens einen Auslaßanschluß (25, 26);

c)  einer der beiden Einlaßanschlüsse (23, 24) wird vom Luftfederbalgdruck der zweiten Achse beaufschlagt, der andere Einlaßanschluß (27, 28) wird vom lastabhängig geregelten Bremsdruck der dritten Achse beaufschlagt;

d)  der Auslaßanschluß (25, 26) ist mit den Bremszylindern (19, 20) der zweiten Achse verbunden;

e)  das Doppelabsperrventil (21, 22) ist vom jeweils höheren Druck an einem der beiden Einlaßanschlüsse (23, 27, 24, 28) auf Durchlaß des jeweils niedrigeren Druckes zum Auslaßanschluß (25, 26) schaltbar.

3. Druckluftbremsanlage nach Anspruch 1, gekennzeichnet durch folgende Merkmale:

a)  die zusätzliche Ventileinrichtung enthält ein erstes Relaisventil (131);

b)  das erste Relaisventil (131) verfügt über einen Steueranschluß (132), einen Vorratsanschluß (134) und über mindestens einen Auslaßanschluß (133);

c)  der Steueranschluß (132) des ersten Relaisventils (131) ist mit den Luftfederbälgen (117, 118) der zweiten Achse verbunden;

d)  der Vorratsanschluß (134) des ersten Relaisventils (131) steht mit der Druckluftquelle (115) in Verbindung;

e)  der Auslaßanschluß (133) des ersten Relaisventils (131) ist mit den Bremszylindern (119, 120) der zweiten Achse verbunden.

4. Druckluftbremsanlage nach Anspruch 3, gekennzeichnet durch folgendes Merkmal:
Zwischen das erste Relaisventil (131) und den Bremszylinder (119, 120) der zweiten Lenkachse ist mindestens ein zweites Relaisventil (135) geschaltet, dessen Vorratsanschluß (137) vom ausgesteuerten Druck des ersten Relaisventils (131) beaufschlagt ist und dessen Steueranschluß (141) mit dem lastabhängig geregelten Bremsdruck der dritten Achse belüftet ist.

5. Druckluftbremsanlage nach Anspruch 1, gekennzeichnet durch folgende Merkmale:

a) die zusätzliche Ventileinrichtung ist als zusätzlicher Bremskraftregler (243) ausgebildet;

b) der zusätzliche Bremskraftregler (243) verfügt über einen Steueranschluß (244), einen Vorratsanschluß (246) und einen Auslaßanschluß (245);

c) der Steueranschluß (244) des zusätzlichen Bremskraftreglers·(243) ist mit den Luftfederbälgen (217, 218) der zweiten Achse verbunden;

d) der Vorratsanschluß (246) des zusätzlichen Bremskraftreglers (243) steht mit der Druckluftquelle (207) in Verbindung;

e) der Auslaßanschluß (245) des zusätzlichen Bremskraftreglers (243) ist mit den Bremszylindern (219, 220) der zweiten Achse verbunden.

6. Druckluftbremsanlage nach einem der vorhergehenden Ansprüche, gekennzeichnet durch folgendes Merkmal:
In die vom Bremskraftregler (1, 101) der dritten Achse zu den Radbremszylindern (9, 10; 109, 110) führende Leitungen ist je ein Magnetregelventil (29, 30; 129, 130) einer elektronisch gesteuerten Blockierschutzanlage angeordnet.

**Claims**

1. Compressed air brake installation for air-suspended triple-axle and multi-axle road vehicles, comprising the following features:

a) a braked and steered first axle is associated with the front part of the vehicle;

b) a braked and steered second axle and a braked third axle are associated with the rear part of the vehicle;

c) the braking force of at least the second and the third axles can be load-dependently regulated in dependence on the pressure of the pneumatic spring bellows;

d) for regulating the braking force of the third axle an automatic load-dependent braking force regulator (1) is provided, the regulating pressure of which is controlled by the pneumatic spring bellows (2, 3) of the third axle;

e) the pneumatic spring bellows (2, 3) of the third axle are connected via a load-dependently controlled pneumatic spring valve to a compressed air source,

caracterised by the following features:

f) the pneumatic spring bellows (17, 18) of the second axle are connected via a pressure-regulating valve (11) to the compressed air source (15);

g) at least one control connection (12, 13) of the pressure-regulating valve (11) is connected to the pneumatic spring bellows (2, 3) of the third axle;

h) the pressure-regulating valve (11) has characteristic curve such that, when pressure is introduced into a lower loading region of the pneumatic spring bellows (2, 3) of the third axle, the pressure applied to the pneumatic spring bellows (17, 18) of the second axle remains constant or virtually constant;

i) for regulating the braking force of the second axle there is provided at least one additional valve arrangement that can be controlled by the pressure of the pneumatic spring bellows (17, 18) of the second axle.

2. Compressed air brake installation according to claim 1, characterised by the following features:

a) the additional valve arrangement is constructed as a double shut-off valve (21, 22);

b) the double shut-off valve (21, 22) is provided with two inlet connections (23, 27; 24, 28) and at least one outlet connection (25, 26);

c) one of the two inlet connections (13, 24) is acted upon by the pressure of the pneumatic spring bellows of the second axle and the other inlet connection (27, 28) is acted upon by the load-dependently regulated brake pressure of the third axle;

d) the outlet connection (25, 26) is connected to the brake cylinders (19, 20) of the second axle;

e) the double shut-off valve (21, 22) can be switched by the higher of the pressures at the two inlet connections (23, 27; 24, 28) to allow the lower of the pressures to pass to the outlet connection (25, 26).

3. Compressed air brake installation according to claim 1, characterised by the following features:

a) the additional valve arrangement contains a first relay valve (131);

b) the first relay valve (131) is provided with a control connection (132), a supply connection (134) and at least one outlet connection (133);

c) the control cennction (132) of the first relay valve (131) is connected to the pneumatic spring bellows (117, 118) of the second axle;

d) the supply connection (134) of the first relay valve (131) is connected to the compressed air source (115);

e) the outlet connection (133) of the first relay valve (131) is connected to the brake cylinders (119, 120) of the second axle.

4. Compressed air brake installation according to claim 3, characterised by the following feature:

there is connected between the first relay valve (131) and the brake cylinder (119, 120) of the second steered axle at least one second relay valve (135), the supply connection (137) of which is acted upon by the outlet pressure of the first relay valve (131) and the control connection (141) of which receives the load-dependently regulated brake pressure of the third axle.

5. Compressed air brake installation according to claim 1, characterised by the following features:

a) the additional valve arrangement is designed as an additional braking forces regulator (243);

b) the additional braking force regulator (243) is provided with a control connection (244), a supply connection (246) and an outlet connection (245);

c) the control connection (244) of the additional braking force regulator (243) is connected to the pneumatic spring bellows (217, 218) of the second axle;

d) the supply connection (246) of the additional braking force regulator (243) is connected to the compressed air source (207);

e) the outlet connection (245) of the additional braking force regulator (243) is connected to the brake cylenders (219, 220) of the second axle.

6. Compressed air brake installation according to one of the preceding claims, characterised by the following feature:

there is arranged in each of the lines running from the braking force regulator (1, 101) of the third axle to the wheel brake cylinders (9, 10; 109, 110) a regulating solenoid valve (29, 30; 129, 130) of an electronically controlled anti-locking installation.

**Revendications**

1. Installation de freinage à air comprimé pour véhiclues routiers à trois ou plus de trois essieux à suspension pneumatique, qui présente les caractéristiques suivantes:

a) un premier essieu freiné et directeur est associé à la partie avant du véhicule;

b un deuxième essieu freiné et directeur et un troisième essieu freiné sont associés à la partie arrière du véhicule;

c) la force de freinage d'au moins le deuxième et le troisième essieux est asservie à la charge, en fonction de la pression des soufflets des ressorts pneumatiques;

d) pour l'asservissement de la force de freinage du troisième essieu, il est prévu un correcteur de force de freinage automatique (1) asservi à la charge, dont la commande de la pression de réglage est exécutée par les soufflets de ressorts pneumatiques (2, 3) du troisième essieu;

e) les soufflets de ressorts pneumatiques (2, 3) du troisième essieu sont raccordés à une source d'air comprimé par l'intermédiaire d'une soupape de ressorts pneumatiques commandée de façon asservie à la charge,

caractérisée par les caractéristiques suivantes:

f) les soufflets de ressorts pneumatiques (17, 18) du deuxième essieu sont raccordés à la source d'air comprimé (15) par l'intermédiaire d'un régulateur de pression (11);

g) au moins un raccord de commande (12, 13) du régulateur de pression (11) est relié aux soufflets de ressorts pneumatiques (2, 3) du troisième essieu;

h) le régulateur de pression (11) présente une caractéristique telle que, à une pression d'entrée située dans un domaine inférieur de charge des soufflets de ressorts pneumatiques (2, 3) du troisième essieu, la pression de sortie envoyée dans les soufflets de ressorts pneumatiques (17, 18) du deuxième essieu reste constante ou presque constante;

i) pour l'asservissement de la force de freinage du deuxième essieu, il est prévu au moins un agencement de soupapes supplémentaire commandé par la pression des soufflets de ressorts pneumatiques (17, 18) du deuxième essieu.

2. Installation de freinage à air comprimé selon la revendication 1, caractérisée par les caractéristiques suivantes:

a) l'agencement de soupapes supplémentaire est réalisé sous la forme d'une soupape d'arrêt double (21, 22);

b) la soupape d-arrêt double (21, 22) est munie de deux raccorsd d'entrée (23, 27; 24, 28) et d'au moins un raccord de sortie (25, 26);

c) l'un des deux raccords d'entrée (23, 24) est alimenté par la pression des soufflets de ressorts pneumatiques du deuxième essieu, l'autre raccord d'entrée (27, 28) est alimenté par la pression de freinage du troisième essieu asservie à la charge;

d) le raccord de sortie (25, 26) est relié aux cylindres de freins (19, 20) du deuxième essieu;

e) la soupape d'arrêt double (21, 22) peut être commutée par la pression qui est la plus élvée à l'un des deux raccords d'entrée (23, 27, 28) sur la transmission de la pression la plus basse sur le raccord de sortie (25, 26).

3. Installation de freinage à air comprimé selon la revendication 1, caractérisée par les caractéristiques suivantes:

a) l'agencement de soupapes supplémentaire comprend une première soupape relatis (131);

b) la première soupape relatis (31) présente un raccord de commande (132), un raccord d'alimentation (134) et au moins un raccord de sortie (133);

c) le raccord de commande (132) de la première soupape relais (131) est relié aux soufflets de ressorts pneumatiques (117, 118) du deuxième essieu;

d) le raccord d'alimentation (134) de la première soupape relais (131) est en communication avec la source d'air comprimé (115);

e) le raccord de sortie (133) de la première soupape relais (131) est relié aux cylindres de freins (119, 120) du deuxième essieu.

4. Installation de freinage à air comprimé selon la revendication 3, caractérisée par la caractéristique suivante:

entre la première soupape relais (131) et les cylindres de freins (119, 120) du deuxième essieu directeur est intercalée au moins une deuxième soupape relais (135) dont le raccord d'alimentation (137) est alimenté par la pression de sortie de la première soupape relais (131) et dont le raccord de commande (141) est alimenté en air à la pression de freinage du troisième essieu qui est asservie à la charge.

5. Installation de freinage à air comprimé selon la revendication 1, caractérisée par les caractéristiques suivantes:

a) l'agencement de soupapes supplémentaire est réalisé sous la forme d'un correcteur de force de freinage supplémentaire (243);

b) le correcteur de force de freinage supplémentaire (243) comprend un raccord de commande (244), un raccord d'alimentation (246) et un raccord de sortie (245);

c) le raccord de commande (244) du correcteur de force de freinage supplémentaire (243) est relié aux soufflets de ressorts pneumatiques (217, 218) du deuxième essieu;

d) le raccord d'alimentation (246) du correcteur de force de freinage supplémentaire (243) est en liaison avec la source d'air comprimé (207);

e) le raccord de sortie (245) du correcteur de force de freinage supplémentaire (243) est relié aux cylindres de freins (219, 220) du deuxième essieu.

6. Installation de freinage è air comprimé selon l'une des revendications précédentes, caractérisée par la caractéristique suivante:

dans chacune des conduites qui mènent du correcteur de force de freinage (1, 101) du troisième essieu aux cylindris de freins des roues (9, 10; 109, 110), est intercalé un régulateur électromagnétique (29, 30; 129, 130) appartenant à une installation de protection anti-blocage commandée électroniquement.

Fig. 1

117  133  131  132  118  138

119
134
137
135
139
141
114
111
112
115
109
102

120
140
2. Lenkachse
136
142
116
113

3. Achse
110

129  104  108  106  107  101  108  105  130  103

Fig. 2

Fig. 3

217  245  243  244  218  220

219

246

211

212

2. Lenkachse

216

214

215

213

209

202

204

208

3. Achse

210

207  206  201  208  205  203

Fig. 4

Ausgesteuerter Druck

$P_1 = 0,4$ bar    $P_2 = 4,5$ bar

Steuerdruck